(19) Europäisches Patentamt European Patent Office Office européen des brevets

(11) **EP 4 249 748 B1**

(12) **EUROPÄISCHE PATENTSCHRIFT**

(45) Veröffentlichungstag und Bekanntmachung des Hinweises auf die Patenterteilung:
**23.04.2025 Patentblatt 2025/17**

(21) Anmeldenummer: **23184669.2**

(22) Anmeldetag: **21.08.2017**

(51) Internationale Patentklassifikation (IPC):
**F03D 9/00** (2016.01)    **F03D 9/25** (2016.01)

(52) Gemeinsame Patentklassifikation (CPC):
**F03D 9/007; F03D 9/255;** F05B 2270/1033; F05B 2270/107; Y02E 10/50; Y02E 10/72

(54) **VERFAHREN ZUM STEUERN EINER WINDENERGIEANLAGE**

METHOD FOR CONTROLLING A WIND TURBINE

PROCÉDÉ DE COMMANDE D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.08.2016 DE 102016115431**

(43) Veröffentlichungstag der Anmeldung:
**27.09.2023 Patentblatt 2023/39**

(62) Dokumentnummer(n) der früheren Anmeldung(en) nach Art. 76 EPÜ:
**17755178.5 / 3 500 753**

(73) Patentinhaber: **Wobben Properties GmbH**
**26607 Aurich (DE)**

(72) Erfinder:
• **Brombach, Johannes**
**13437 Berlin (DE)**
• **Schubert, Katharina**
**40668 Meerbusch (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**EP-A2- 2 763 263        WO-A1-2015/123549**
**CN-A- 102 185 526      DE-A1- 102011 081 795**

## Beschreibung

Die vorliegende Erfindung betrifft ein Verfahren zum Steuern wenigstens einer Windenergieanlage. Die vorliegende Erfindung betrifft auch eine entsprechende Windenergieanlage und sie betrifft einen Windpark mit mehreren solcher Windenergieanlagen. Die vorliegende Erfindung betrifft auch ein Windenergiesystem mit wenigstens einem Windpark und wenigstens einer Solaranlage.

Windenergieanlagen sind bekannt und grundsätzlich dazu vorgesehen, Energie aus dem Wind zu entnehmen und als elektrischen Strom in ein elektrisches Versorgungsnetz einzuspeisen. Zusätzlich zu dieser Grundaufgabe nehmen Windenergieanlagen auch immer häufiger Aufgaben zum Stützen des elektrischen Versorgungsnetzes wahr.

Diese zunehmende Bedeutung der Netzstützung hängt zum Teil auch damit zusammen, dass der Anteil dezentraler Energieeinspeiser, zu denen neben Windenergieanlagen auch besonders Photovoltaikanlagen gehören, zunimmt. Damit ist es wünschenswert, dass dezentrale Energieeinspeiser auch einen Beitrag zum Stützen des Netzes leisten können, zumindest ist es wünschenswert, dass einige dieser dezentralen Einspeiser einen solchen Beitrag leisten können.

Als ein Problem zum Stützen des elektrischen Versorgungsnetzes mittels Windenergieanlagen wird häufig genannt, dass deren Fähigkeit zusätzliche Leistung zum Netzstützen einzuspeisen von der aktuellen Wettersituation abhängt. Mit anderen Worten soll ein Problem darin bestehen, dass Windenergieanlagen bei wenig Wind oder bei gar keinem Wind wenig oder gar keine Stützleistung einspeisen können.

Tatsächlich wird ein ähnliches Problem auch für Photovoltaikanlagen genannt, die naturgemäß nur tagsüber, besonders bei Sonnenschein, Strom erzeugen können.

Windenergieanlagen haben grundsätzlich das Potential, kinetische Energie besonders in ihren Rotoren zu speichern, um damit beispielsweise Momentanreserve bereitstellen zu können. Aber auch eine solche Bereitstellung positiver Momentanreserve aus der genannten kinetischen Energie wird nur möglich sein, wenn sich der Rotor der betreffenden Windenergieanlage auch dreht. In dem Fall, wenn sich der Rotor der Windenergieanlage dreht, ist es dann aber möglich, eine Momentanreserve bereitzustellen, also kurzfristig die eingespeiste Leistung zu erhöhen. Eine solche Einspeisung von Momentanreserve ist bei Photovoltaikanlagen allerdings nicht bekannt. Sie könnte allenfalls durch eine vorsorgliche Abregelung oder das Bereitstellen eines Energiespeichers realisiert werden.

Das Deutsche Patent- und Markenamt hat in der Prioritätsanmeldung zu vorliegender Anmeldung folgenden Stand der Technik recherchiert: DE 10 2011 081 795 A1, DE 10 2013 101 099 A1, DE 10 2013 203 540 A1, DE 10 2014 101 809 A1, US 2011/0057445 A1, US 2016/0065115 A1, WO 2014/118059 A1, DE 10 2009 037 239 A1 und DE 297 15 248 U1.

Der vorliegenden Erfindung liegt somit die Aufgabe zugrunde, zumindest eines der oben genannten Probleme zu adressieren. Insbesondere liegt der Erfindung die Aufgabe zugrunde, die Netzintegration erneuerbarer Energien zu verbessern. Möglichst soll eine Momentanreservebereitstellung zu jedem Zeitpunkt im Netz realisiert werden. Besonders soll ein möglichst hoher Deckungsanteil bei der Stromerzeugung durch erneuerbare Energiequellen erreicht oder zumindest ermöglicht werden. Insbesondere soll eine netztechnische Obergrenze beim Zubau von erneubaren Energiequellen aufgrund fehlender Netzstützung vermieden werden. Zumindest soll gegenüber bisherigen Lösungen eine alternative Lösung vorgeschlagen werden.

Erfindungsgemäß wird ein Verfahren nach Anspruch 1 vorgeschlagen. Das Verfahren betrifft somit das Steuern wenigstens einer Windenergieanlage zum Erzeugen elektrischer Energie aus Wind zum Einspeisen in ein elektrisches Versorgungsnetz. Das Verfahren zum Steuern einer Windenergieanlage ist sinngemäß auf das Steuern mehrerer Windenergieanlagen übertragbar. Besonders steuert jede Windenergieanlage vorzugsweise ihren Arbeitspunkt selbsttätig, kann dazu aber zur Koordination Vorgaben erhalten, die besonders von einer übergeordneten Steuereinheit wie beispielsweise einer Parksteuerung zum Steuern eines Windparks koordiniert und bereitgestellt werden können.

Die Windenergieanlage weist einen aerodynamischen Rotor mit in ihrem Blattwinkel verstellbaren Rotorblättern auf. Grundsätzlich kann auch ein einzelnes Rotorblatt ausreichend sein, was sich heutzutage aber als grundsätzlich ungeeignet herausgestellt hat. Außerdem ist der Rotor mit einer variablen Rotordrehzahl betreibbar. Insbesondere im Teillastbereich, wenn die Windgeschwindigkeit noch keine Nennwindgeschwindigkeit erreicht hat, kann die Rotordrehzahl vom gewählten Betriebspunkt abhängen. Grundsätzlich ist die Rotordrehzahl aber, innerhalb sinnvoller Grenzen, veränderlich und vorgebbar.

Mit dem aerodynamischen Rotor ist ein Generator gekoppelt, der eine Generatorleistung erzeugt.

Es wird vorgeschlagen, dass die Windenergieanlage in einem Normalmodus betrieben wird, in dem sie verfügbare Windleistung bis zu einer Nennleistung in das elektrische Versorgungsnetz einspeist. Solange der Wind also noch so schwach ist, dass er keine Nennleistung liefern kann, wird in diesem Normalmodus die verfügbare Windleistung und damit so viel Leistung wie möglich aus dem Wind gewonnen und in das elektrische Versorgungsnetz eingespeist. Erreicht die Windgeschwindigkeit Nennwindgeschwindigkeit und geht darüber hinaus, so muss zum Schutz von Komponenten der Windenergieanlage die Leistung auf Nennleistung begrenzt werden. Regelmäßig ist diesem Normalmodus auch ein Betriebspunkt zugeordnet, der von der Windgeschwindigkeit abhängt.

Außerdem wird vorgeschlagen, dass die Windenergieanlage in Abhängigkeit einer Betriebssituation wenigstens einer in dasselbe Netz einspeisenden Solaranlage aus einem Normalmodus in einen Stützmodus wechselt. Die Windenergieanlage ist also auch in einem Stützmodus betreibbar, der sich von dem Normalmodus unterscheidet. Es wird hier vorgeschlagen, dass dieser Stützmodus in Abhängigkeit einer in dasselbe Netz einspeisenden Solaranlage erfolgt. Das wird besonders für Photovoltaikanlagen vorgeschlagen, bei denen die jeweils eingespeiste Leistung praktisch verzögerungsfrei mit der eingestrahlten Sonnenleistung schwankt und die üblicherweise praktisch keine Energiespeicher aufweisen. Besonders für Photovoltaikanlagen besteht somit das Problem, dass sie nicht zum Bereitstellen einer Momentanreserve geeignet ist. Dennoch können auch andere Solaranlagen damit unterstützt werden.

Besonders ist hier vorgesehen, dass die Windenergieanlage in dem Stützmodus mehr Momentanreserve einspeist, einspeisen kann oder zumindest mehr Momentanreserve anbietet, als in ihrem Normalmodus. Es kommt aber auch in Betracht, dass in diesem Stützmodus die Windenergieanlage anderweitig einen höheren Stützbeitrag zum Stützen des elektrischen Versorgungsnetzes liefert, als im Normalmodus.

Besonders ist vorgesehen, dass dieser Stützmodus ausgewählt wird, wenn die wenigstens eine in dasselbe elektrische Versorgungsnetz, das vereinfachend auch als Netz bezeichnet werden kann, einspeisende Photovoltaikanlage vergleichsweise viel elektrische Leistung in das Netz einspeist, insbesondere wenn sie mit ihrer Nennleistung einspeist. Mit anderen Worten wird hier der Stützmodus der wenigstens einen Windenergieanlage vorgeschlagen, wenn viel Sonneneinstrahlung vorhanden ist.

Es wurde erfindungsgemäß nämlich erkannt, dass es regelmäßig eine Korrelation zwischen einer hohen Sonneneinstrahlung und damit viel eingespeister Solarleistung einerseits und schwachem Wind und damit wenig eingespeister Solarleistung andererseits besteht. Hierzu wird nun vorgeschlagen, die wenigstens eine Windenergieanlage in einem solchen Fall dafür vorzusehen, einen vergleichsweise großen Beitrag zum Stützen des elektrischen Versorgungsnetzes zu leisten. Besonders das Bereitstellen oder zumindest Anbieten von Momentanreserve kann eine Windenergieanlage in einer solchen Situation praktisch für die wenigstens eine genannte einspeisende Photovoltaikanlage mit übernehmen.

Dadurch kann die Situation erreicht werden, dass bei starker Sonneneinstrahlung viel photovoltaische Leistung eingespeist werden kann, während gleichzeitig ein hohes Maß an Stützpotential, besonders Momentanreserve, bereitgestellt werden kann, das die photovoltaischen Solaranlagen selbst nicht bereitstellen könnten. Dadurch können sich Photovoltaikanlagen und Windenergieanlagen in vorteilhafter Weise ergänzen, indem bei starker Sonneneinstrahlung die Photovoltaikanlagen einspeisen und die Windenergieanlagen stützen.

Grundsätzlich kann die wenigstens eine Windenergieanlage allerdings auch dann in den Stützmodus gehen, wenn sie selbst auch etwas oder sogar viel Windleistung einspeisen kann. Es wurde zwar erkannt, dass eine Korrelation zwischen viel Sonneneinstrahlung und wenig Wind besteht, die vorgeschlagene Lösung kann aber auch in den seltenen Fällen Anwendung finden, in denen viel Sonneneinstrahlung und gleichzeitig viel Wind vorhanden ist.

Vorzugsweise wird somit vorgeschlagen, dass die Windenergieanlage in dem Stützmodus mehr Momentanreserve zur Verfügung stellen kann, als in dem Normalmodus.

Gemäß einer Ausführungsform wird vorgeschlagen, dass in Abhängigkeit einer Frequenzänderung df/dt einer im elektrischen Versorgungsnetz erfassten Netzfrequenz f eine Momentanreserveleistung $P_M$ in das elektrische Versorgungsnetz eingespeist wird, wobei zwischen dem Normalmodus und dem Stützmodus unterschiedliche Abhängigkeiten der Momentanreserveleistung $P_M$ von der Frequenzänderung df/dt derart vorgesehen sind, dass bei gleicher Frequenzänderung df/dt der Betrag der Momentanreserveleistung $P_M$ im Stützmodus größer ist als im Normalmodus. Eine Momentanreserve, die in Abhängigkeit der Frequenzänderung in das elektrische Versorgungsnetz eingespeist wird, dient besonders dazu, Frequenzänderungen entgegenzuwirken. Ein solches Entgegenwirken soll möglichst schnell, bzw. sofort erfolgen. Deshalb wird auch der Begriff Momentanreserveleistung oder vereinfacht Momentanreserve verwendet und auch nachfolgend wird dieser Begriff Momentanreserve synonym für Momentanreserveleistung verwendet.

Das Einspeisen einer solchen Momentanreserve ist geeignet, das elektrische Versorgungsnetz zu stützen und daher wünschenswert. Gleichwohl ist zu beachten, dass das Einspeisen einer solchen Momentanreserve auch eine Belastung für die einspeisende Windenergieanlage darstellen kann. Besonders das schnelle Erhöhen der eingespeisten Leistung, besonders wenn diese Erhöhung an Auslegungsgrenzen heranreicht, kann dadurch die Bauelemente belasten. Außerdem können dadurch auch Leistungseinbußen bedingt werden, weil die Windenergieanlage dabei ihren optimalen Arbeitspunkt zumindest kurzfristig verlässt. Besonders die Verwendung von Schwungenergie aus dem rotierenden Rotor der Windenergieanlage bedingt ein Abbremsen dieses Rotors, was einerseits dazu führen kann, dass auch der aerodynamisch optimale Betriebspunkt verlassen wird, was aber andererseits auch zu einer mechanischen Belastung der Anlage führen kann.

Das Einspeisen einer Momentanreserve ist daher für den Betreiber der Windenergieanlage nicht unbedingt wünschenswert.

Daher wird vorgeschlagen, dass in dem Normalmodus weniger Momentanreserve eingespeist wird oder angeboten wird, als im Stützmodus. Das Einspeisen einer Momentanreserve hängt regelmäßig von dem Erfassen einer Frequenzänderung der Spannung des elektrischen Versorgungsnetzes ab, nämlich von der Frequenzänderung df/dt. Es wird nun vorgeschlagen, dass im Normalmodus auf eine Frequenzänderung schwächer reagiert wird als im Stützmodus. Entsprechend wird bei gleich großer Frequenzänderung im Normalmodus weniger Momentanreserve bereitgestellt, also eingespeist, als im Stützmodus.

Vorzugsweise kann die Momentanreserveleistung $P_M$ mit der folgenden Formel berechnet werden:

$$P_M = k \cdot df/dt$$

Hierbei bildet k einen Abhängigkeitsfaktor, der dem Betrage nach im Stützmodus größer ist als im Normalmodus. Der Abhängigkeitsfaktor k bestimmt somit den Zusammenhang zwischen der einzuspeisenden Momentanreserveleistung $P_M$ und der Frequenzänderung df/dt und kann dabei für den Normalmodus und den Stützmodus unterschiedlich groß eingestellt werden. Sein Betrag wird für den Stützmodus größer eingestellt. Da bei einer Frequenzabsenkung, also einem negativen df/dt Momentanreserve zum Stützen eingespeist werden sollte, wird der Abhängigkeitsfaktor k üblicherweise einen negativen Wert aufweisen. Dabei kann statt des Abhängigkeitsfaktors k auch beispielsweise eine Funktion verwendet werden oder es können ggf. weitere Kriterien einfließen wie beispielsweise die Berücksichtigung von Grenzwerten oder Anfangswerten. Auch Randbedingungen können berücksichtigt werden, beispielsweise dass erst ein Grenzwert einer absoluten Frequenzabweichung dem Betrage nach überschritten werden muss. Vorzugsweise ist der Abhängigkeitsfaktor k im Falle des Stützmodus wenigstens doppelt so groß wie im Falle des Normalmodus. Gemäß einer Ausführungsform kommt in Betracht, dass der Abhängigkeitsfaktor k im Normalmodus 0 ist, so dass dann im Normalmodus keine Momentanreserve eingespeist wird.

Es kommt somit auch in Betracht, dass sich der Normalmodus und der Stützmodus besonders durch diese unterschiedliche Höhe der Momentanreserve unterscheiden. Dabei kommt auch in Betracht, dass sich der konkrete Arbeitspunkt zwischen dem Normalmodus und dem Stützmodus nicht unterscheidet. Es kommt also in Betracht, dass die Windenergieanlage grundsätzlich in beiden Modi in ihrem optimalen Arbeitspunkt betrieben wird, solange das Abrufen einer Momentanreserve nicht erfolgt, solange also die Frequenzänderung df/dt beispielsweise klein genug ist, oder wenn die absoluten Frequenzabweichungen von der normalen Netzfrequenz, also besonders der Nennfrequenz, in einem kleinen besonders vernachlässigbaren Bereich nur auftreten.

Gemäß einer Ausführungsform wird vorgeschlagen, dass zum Stützen des elektrischen Versorgungsnetzes eine Stützleistung, insbesondere eine Momentanreserveleistung angeboten wird, die zum Einspeisen in das elektrische Versorgungsnetz abgerufen werden kann, oder die in Abhängigkeit eines Netzverhaltens eingespeist werden kann, wobei die wenigstens eine Windenergieanlage im Stützmodus eine höhere Stützleistung anbietet als im Normalmodus. Auch hier wird berücksichtigt, dass das Einspeisen einer Momentanreserve zum Stützen des elektrischen Versorgungsnetzes zwar für das Netz vorteilhaft ist, aber nicht unbedingt für den Betreiber der Windenergieanlage vorteilhaft ist. Daher wird vorgeschlagen, eine Momentanreserve in dem Normalmodus nicht oder mit geringerer Amplitude anzubieten als im Stützmodus.

Auch hier liegt, ebenso wie bei der oben beschriebenen unterschiedlichen Frequenzänderungsabhängigkeit der Gedanke zugrunde, dass das Anbieten oder Einspeisen einer höheren Momentanreserve besonders dann vorteilhaft ist, wenn die in dasselbe Netz einspeisenden Photovoltaikanlagen mit hoher Leistung einspeisen. Auch hier kann vorgesehen sein, dass die wenigstens eine Windenergieanlage sowohl im Normalmodus als auch im Stützmodus in demselben Betriebspunkt betrieben wird, solange keine Momentanreserve und keine andere Stützleistung abgerufen wird. Es kommt aber auch in Betracht, was unten noch erläutert wird, dass die Windenergieanlage auch gezielt in einem anderen Betriebspunkt betrieben wird.

Vorzugsweise ist vorgesehen, dass gemäß einer Ausführungsform die Windenergieanlage im Stützmodus zumindest teilweise weniger Leistung in das elektrische Versorgungsnetz einspeist, als im Normalmodus, oder dass sie Leistung aus dem elektrischen Versorgungsnetz entnimmt, um dadurch eine erhöhte Momentanreserve bereitzustellen.

Durch eine solche Maßnahme kann besonders die mögliche Stützleistung, besonders die mögliche Momentanreserve erhöht werden. Hierzu verlässt die Windenergieanlage ihren optimalen Betriebspunkt, weil das Bereitstellen oder zumindest Anbieten von Momentanreserve dann im Vordergrund steht. Besonders kann hierdurch erreicht werden, dass eine so große Momentanreserve oder andere Stützleistung bereitgestellt oder zumindest angeboten wird, dass dies für die wenigstens eine in dasselbe Netz einspeisende Photovoltaikanlage somit ausreichend ist. Durch das Verlassen eines optimalen Betriebspunktes wird regelmäßig weniger Leistung in das Netz eingespeist. Es kann aber auch in Betracht kommen, dass ein anderer Betriebspunkt gefunden wird, in dem nicht oder nicht wesentlich viel weniger Leistung in das Netz eingespeist wird, dass aber ein Wechsel zu diesem neuen Betriebspunkt hin zeitweise eine Reduzierung der Leistungseinspeisung bedeutet. Dies trifft besonders für einen neuen Betriebspunkt zu, der eine höhere Drehzahl aufweist, wobei das Beschleunigen auf diese höhere Drehzahl für den Rotor für die Dauer der Beschleunigung eine Leistungseinbuße bedeutet. Ggf. kann bei dieser höheren Drehzahl dennoch ähnlich viel Leistung wie im optimalen Betriebspunkt eingespeist werden, aber vielleicht mit einer größeren Anlagenbelastung oder anderen Nachteilen.

Gemäß einer Ausführungsform wird vorgeschlagen, dass der Stützmodus einen Trudelbetrieb umfasst, in dem sich der Rotor der Windenergieanlage durch Antrieb durch den Wind dreht, ohne Leistung zu erzeugen. Ein solches Trudeln der Windenergieanlage kann besonders dann vorgesehen sein, wenn nur wenig Wind herrscht. Die Windenergieanlage wird dann regelmäßig nicht in Betrieb genommen, weil die vorhandene Windenergie nicht ausreicht, die zum Betrieb der Windenergieanlage benötigte Leistung aufzubringen, so dass im Ergebnis keine Leistung eingespeist werden könnte. Hier wird also vorgeschlagen, diesen Trudelbetrieb bewusst zuzulassen und die Windenergieanlage dabei aber nicht abzuschalten. Der Normalmodus wäre hierbei, die Anlage abzuschalten und der vorgeschlagene Stützmodus ist hierbei, dass die Anlage in diesem Trudelbetrieb eingeschaltet ist. Damit dreht sich der Rotor der Windenergieanlage zumindest etwas und kann ggf. dadurch auch eine Momentanreserve bei Bedarf zumindest kurzzeitig bereitstellen.

Gemäß einer weiteren Variante wird vorgeschlagen, dass der Stützmodus einen Betrieb hoher Drehzahl umfasst, bei dem die Windenergieanlage mit möglichst hoher Drehzahl betrieben wird, ohne Leistung einzuspeisen, oder wobei nur wenig Leistung eingespeist wird, nämlich weniger Leistung als bei der Drehzahl im Normalmodus möglich wäre. Auch hier verändert die Windenergieanlage ihren Betriebspunkt vom Normalmodus zum Stützmodus hin. Es wird nun nicht mehr die optimale Drehzahl eingestellt, bei der maximale Leistung erzeugt werden kann, sondern es wird eine möglichst hohe Drehzahl eingestellt. Eine möglichst hohe Drehzahl ist insoweit eine Drehzahl, die aufgrund des vorherrschenden Windes erreicht werden kann, wobei natürlich Drehzahlgrenzwerte berücksichtigt werden. Durch diese hohe, also zumindest erhöhte Drehzahl wird ein Betriebspunkt mit hoher kinetischer Energie, also hoher Rotationsenergie gewählt. Diese hohe Rotationsenergie kann dann bei Bedarf als Momentanreserve verwendet werden. Auch hierdurch ist eine hohe Momentanreserve bereitstellbar, die über dem Maß liegen kann, das die Windenergieanlage bei dem hierbei vorhandenen Wind üblicherweise bereitstellt oder bereitstellen müsste.

Gemäß einer Ausführungsform wird vorgeschlagen, dass der Stützmodus einen Nullleistungsbetrieb betrifft, indem die Drehzahl ohne Leistungseinspeisung bis zur maximalen Drehzahl erhöht wird. Dies entspricht teilweise dem zuvor beschriebenen Betrieb mit möglichst hoher Drehzahl. Hier wird aber ausdrücklich vorgeschlagen, die Drehzahl bis zur maximalen Drehzahl, also insbesondere bis zur Nenndrehzahl zu bringen und dabei bewusst keine Leistung einzuspeisen. Hierunter fällt auch der Fall, dass die Anlage nun mit Nenndrehzahl betrieben wird und noch Leistung einspeisen könnte, sie aber nicht einspeist. Dieser Fall betrifft besonders die Situation, dass ausreichend Wind vorhanden ist, um die Windenergieanlage bei dieser maximalen Drehzahl zu betreiben. Damit ist zumindest unter Berücksichtigung der Windschwankungen auch möglich, dass die Drehzahl noch weiter ansteigt, was hier aber regelungstechnisch verhindert wird. Besonders wird die Windenergieanlage somit bei dieser maximalen Drehzahl gehalten. Dazu wird eine Regelung über eine Blattverstellung vorgesehen, bei der die Rotorblätter so verstellt und regelungstechnisch ständig nachgestellt werden, dass diese maximale Drehzahl gehalten wird. Es kommt dabei in Betracht, dass die Windenergieanlage aber so viel Leistung erzeugt, dass sie sich damit selbst versorgen kann. Die Windenergieanlage erzeugt dann also einen Eigenbedarf, speist nicht ein, kann aber sofort einspeisen, falls dies notwendig ist.

Gemäß einer weiteren Ausführungsform wird vorgeschlagen, dass der Stützmodus einen motorischen Betrieb umfasst, in dem der Rotor der Windenergieanlage durch elektrische Leistung aus dem elektrischen Versorgungsnetz angetrieben wird. Dabei soll diese elektrische Leistung zum Antreiben der Windenergieanlage die momentan von der Solaranlage in das elektrische Versorgungsnetz eingespeiste Solarleistung nicht überschreiten. Andernfalls könnten die Solaranlagen im Ergebnis keinen Einspeisebeitrag in das Netz liefern. Grundsätzlich ist aber davon auszugehen, dass im Stützmodus, nämlich besonders dann, wenn viel Sonneneinstrahlung vorhanden ist, die Solaranlagen wesentlich mehr Leistung in das elektrische Versorgungsnetz einspeisen, als für diesen motorischen Betrieb notwendig ist. Auch hier liegt der Gedanke zugrunde, dass die genannten Solaranlagen viel Leistung einspeisen und ein wenig dieser Leistung dafür verwendet wird, die Windenergieanlagen im motorischen Betrieb aber im Wesentlichen im Leerlauf zu betreiben. Die Rotorblätter werden dabei so eingestellt, dass sie möglichst wenig Strömungswiderstand bei der Drehung haben. Diese geringe Leistung zum Antreiben der Windenergieanlagen ermöglicht aber, dass durch die Drehung der Rotoren der Windenergieanlagen eine hohe Momentanreserve bereitgestellt werden kann.

Besonders Photovoltaikanlagen, die also unmittelbar aus der Sonneneinstrahlung Strom erzeugen, können durch die vorgeschlagenen Varianten durch die Windenergieanlagen unterstützt werden. Solche Photovoltaikanlagen können in ihrer eingespeisten Leistung unmittelbar und im Grunde sofort schwanken, wenn die Sonneneinstrahlung entsprechend schwankt. Damit fällt es solchen Photovoltaikanlagen nicht nur schwer, das Netz zu stützen, sondern sie können bei schwankender Sonneneinstrahlung auch selbst zu Schwankungen im elektrischen Versorgungsnetz beitragen, wenn sie dominant genug sind. Auch das soll erfindungsgemäß berücksichtigt werden und durch das Verhalten der Windenergieanlagen ausgeglichen werden.

Gemäß einer Ausführungsform wird vorgeschlagen, dass das Wechseln in den Stützmodus von der vorherrschenden Windgeschwindigkeit abhängt. Besonders bei schwachem Wind kann in diesen Stützmodus gewechselt werden. Bei starkem Wind kann möglicherweise ein Betrieb der Windenergieanlage in einem optimalen Arbeitspunkt vorteilhaft sein, bei dem die Windenergieanlage selbst viel Leistung einspeist und damit im Ergebnis auch einen Betriebspunkt hat, in dem sie auch ein hohes Stützpotential hat.

Ergänzend oder alternativ wird vorgeschlagen, dass eine Eigenschaft des Stützmodus von der vorherrschenden Windgeschwindigkeit abhängt. Beispielsweise kann bei geringen Windgeschwindigkeiten vorgesehen sein, in dem Stützmodus gezielt eine hohe Drehzahl vorzusehen, den Betriebspunkt also zu einer höheren Drehzahl hin zu verändern. Bei hohen Windgeschwindigkeiten kann vorgesehen sein, den Betriebspunkt nicht zu verändern, aber besonders eine hohe Momentanreserve zumindest anzubieten.

Vorzugsweise wird vorgeschlagen, dass das Wechseln in den Stützmodus und außerdem oder alternativ wenigstens eine Eigenschaft des Stützmodus von wenigstens einem Netzzustand des elektrischen Versorgungsnetzes abhängen bzw. von wenigstens einer dazu repräsentativen Größe abhängen. Dadurch kann eventuell antizipiert werden, ob ein Stützmodus, nämlich besonders eine Stützleistung oder Momentanreserve gebraucht werden könnte bzw. in welcher Höhe sie gebraucht werden könnte. Die nachfolgend erläuterten Netzzustände können unmittelbar im Sinne der physikalischen Größe, oder auch durch einen dazu repräsentativen Wert berücksichtigt werden. Letzteres kommt besonders auch dann in Betracht, wenn die jeweilige Größe, also der jeweilige Netzzustand nicht unmittelbar von der Windenergieanlage erfasst wird.

Somit wird ein Wechsel oder eine Eigenschaft des Stützmodus in Abhängigkeit der Netzfrequenz vorgeschlagen. Beispielsweise kann ein Stützmodus besonders dann sinnvoll sein, wenn die Netzfrequenz bereits einen vergleichsweise niedrigen Wert aufweist, wenn sie also beispielsweise unterhalb der Nennfrequenz aber noch oberhalb eines unteren Grenzwertes liegt.

Auch eine Netzfrequenzänderung kann einen Hinweis darauf geben, ob ein Stützmodus in Kürze erforderlich zu werden scheint. Bei einem besonders ruhigen Netz, wenn also wenig und/oder nur geringe Netzfrequenzänderungen auftreten, wird ein Stützmodus weniger benötigt, als wenn das Netz hinsichtlich seiner Frequenzänderungen eher unruhig ist.

Auch die Berücksichtigung eines Netzfrequenzänderungsgradienten kann hilfreich sein, um beurteilen zu können, ob ein Stützmodus erforderlich zu werden scheint. Hier erfolgt insoweit eine quantitative Auswertung einer Netzfrequenzänderung nach ihrer Änderungsamplitude. Hier spielt die Häufigkeit der Frequenzänderung nicht hinein. Gleichwohl kann es vorteilhaft sein, sowohl die Häufigkeit der Netzfrequenzänderung, also wie unruhig das Netz ist, zu berücksichtigen, als auch den Netzfrequenzänderungsgradienten, also die Amplitude der Frequenzänderung zu berücksichtigen.

Ein weiterer Netzzustand ist die Netzspannung. Besonders bei einer vergleichsweise hohen Spannung ist die Notwendigkeit eines Stützmodus wahrscheinlicher als bei einer geringeren Netzspannung. Dabei ist besonders die Eigenschaft des Messpunktes für diese Netzspannungsmessung zu berücksichtigen, da die Netzspannung in einem komplexen elektrischen Versorgungsnetz sich mit ihrem Ort ändert.

Auch eine Netzspannungsänderung zu berücksichtigen wird vorgeschlagen. Beispielsweise kann eine abfallende Netzspannung ein Hinweis auf das Notwendigwerden eines Stützmodus sein, selbst wenn die Netzspannung zunächst noch einen vergleichsweise hohen Wert aufweist.

Es wird auch vorgeschlagen, dass ein externes Netzzustandssignal berücksichtigt wird, das einen Netzzustand anzeigt. Hiervon abhängig kann der Stützmodus gewählt werden und ggf. auch seine Eigenschaften. Hierbei wird berücksichtigt, dass der Netzbetreiber, der das elektrische Versorgungsnetz betreibt, Informationen über das elektrische Versorgungsnetz besonders auch von unterschiedlichen Netzpunkten hat. Davon abhängig kann besser auf Bedürfnisse oder zu erwartende Ereignisse des elektrischen Versorgungsnetzes geschlossen werden.

Gemäß einer Variante wird vorgeschlagen, dass ein Frequenzumrichteranteil berücksichtigt wird, der ein Verhältnis von Leistung, die von Frequenzumrichtern ins elektrische Versorgungsnetz eingespeist wird, zu insgesamt in das elektrische Versorgungsnetz eingespeister Leistung angibt. Wenn beispielsweise der Anteil der Frequenzumrichter am Netz, also nur bezogen auf die damit eingespeiste Leistung, größer als 80% ist und davon der Anteil von Photovoltaikanlagen, die ebenfalls mittels eines Freuqenzumrichters in das Netz einspeise, größer als 50% ist, kann dies Auswirkungen auf das elektrische Versorgungsnetz haben.

Eine Möglichkeit, den Frequenzumrichteranteil zu erkennen, könnte auch darin bestehen, dass dies dem Betreiber des elektrischen Versorgungsnetzes bekannt ist und diese Information an die betreffenden Windenergieanlagen weitergegeben wird.

Die Wahl eines Stützmodus kann auch davon abhängig gemacht werden, ob ein Netzbetreiber ein entsprechendes Anforderungssignal zum Anfordern einer Momentanreserve überträgt, ob also eine Momentanreserve von einem Netzbetreiber angefordert wird. Das kann auch bedeuten, dass eine solche Momentanreserve in einer gewissen Höhe bezogen auf die eingespeiste Leistung angefordert wird. In diesem Fall könnte eine solche leistungsabhängige Anforderung unter Berücksichtigung der Leistungseinspeisung der berücksichtigten Photovoltaikanlagen auf eine Momentanreserve für die Windenergieanlagen umgerechnet werden, die dies für die Solaranlagen dann übernehmen würden.

Gemäß einer Ausführungsform wird vorgeschlagen, dass die wenigstens eine Windenergieanlage in den Stützmodus wechselt und gegenüber dem Normalmodus ihre Drehzahl erhöht, wenn die wenigstens eine Solaranlage wenigstens einen vorgebbaren Mindestanteil ihrer Nennleistung, insbesondere 50% ihrer Nennleistung, in das elektrische Versorgungsnetz einspeist und außerdem ein Bedarf einer Momentanreserve erfasst wurde. Hierdurch kann konkret dieser Stützmodus ausgewählt werden.

Vorzugsweise wird vorgeschlagen, dass die wenigstens eine Windenergieanlage dauerhaft in dem Stützmodus mit gegenüber dem Normalmodus erhöhter Rotordrehzahl betrieben wird, solange die wenigstens eine Solaranlage wenigstens einen vorgebbaren Mindestanteil ihrer Nennleistung, insbesondere wenigstens 50% ihrer Nennleistung, in das elektrische Versorgungsnetz einspeist und der vorherrschende Wind so schwach ist, dass die wenigstens eine Windenergieanlage höchstens einen vorgebbaren Maximalanteil ihrer Nennleistung, insbesondere höchstens 50% ihrer Nennleistung, in das elektrische Versorgungsnetz einspeisen kann. Hier liegt besonders der Gedanke zugrunde, dass die Wettersituation, nämlich vereinfacht ausgedrückt viel Sonne und wenig Wind, berücksichtigt wird und entsprechend die Solaranlagen zum Einspeisen von möglichst viel Leistung verwendet werden und die Windenergieanlagen im Wesentlichen zum Stützen des elektrischen Versorgungsnetzes verwendet werden, zumindest dazu, eine Stützleistung bei Bedarf liefern zu können.

Gemäß einer Ausführungsform wird eine Lösung vorgeschlagen, die dadurch gekennzeichnet ist, dass ein Bedarf einer relativen Momentanreserve erfasst wird, wobei diese relative Momentanreserve eine zusätzlich einspeisbare Leistung in Bezug auf eine Referenzleistung kennzeichnet. Basierend auf diesem erfassten Bedarf der relativen Momentanreserve und einer die Solaranlage kennzeichnenden Solarreferenzleistung wird eine solare Momentanreserve bestimmt, die eine Leistung ist, die eine von der Solaranlage vorzuhaltende oder bereitzustellende Momentanreserve kennzeichnet. Diese solare Momentanreserve ist somit ein Rechenwert, wenn die insgesamt vorzusehende Momentanreserve in gleichen Teilen auf die leistungeinspeisenden Erzeuger verteilt wird.

Dazu wird nun vorgeschlagen, dass die wenigstens eine Windenergieanlage so in einem Stützmodus betrieben wird, dass sie die bestimmte solare Momentanreserve bereitstellen kann. Vorzugsweise kann sie diese zusätzlich zu einer Momentanreserve bereitstellen, die sie aufgrund ihres eigenen Betriebs und der relativen Momentanreserve einspeisen müsste. Hierdurch kann besonders eine vereinheitlichte Momentanreservebereitstellung der Größe nach beziffert werden. Dabei wird vorgeschlagen, dass die Erzeuger, die die für sie berechnete Momentanreserve nicht oder nur mit großem Aufwand einspeisen können oder bereitstellen können, diese sich von dafür geeigneten Windenergieanlagen abnehmen lassen. Die Windenergieanlagen können dann besonders in einem Stützmodus diese Anforderung von den Solaranlagen übernehmen.

Vorzugsweise wird vorgeschlagen, dass die relative Momentanreserve die zusätzlich einspeisbare Leistung in Bezug auf eine momentan in das elektrische Versorgungsnetz oder einen relevanten Netzabschnitt eingespeiste Leistung angibt. Gemäß diesem Vorschlag ist die Referenzleistung diejenige, die momentan in das elektrische Versorgungsnetz eingespeist wird oder die in einen relevanten Netzabschnitt eingespeist wird.

Außerdem oder alternativ ist die Solarreferenzleistung die momentan von der Solaranlage in das elektrische Versorgungsnetz eingespeiste Solarleistung. Es wird somit auch hier auf den aktuellen Istwert abgestellt.

Außerdem oder alternativ wird die wenigstens eine Windenergieanlage dann so in einem Stützmodus betrieben, dass sie gegenüber ihrem Normalmodus eine erhöhte Drehzahl aufweist, um dadurch die solare Momentanreserve für die Solaranlage bereitzustellen. Besonders dadurch kann sie das Bereitstellen oder Einspeisen der solaren Momentanreserve erreichen.

Vorzugsweise berechnet sich die solare Momentanreserve als Produkt der relativen Momentanreserve mit der momentan eingespeisten Solarleistung. Dabei kann die relative Momentanreserve ein vergleichsweise konstanter Wert sein, der auf einfache Weise mit der momentan eingespeisten Solarleistung multipliziert werden kann, die grundsätzlich bekannt ist, zumindest für die jeweilige Solaranlage bekannt ist.

Optional wird vorgeschlagen, dass eine Gewichtungsfunktion berücksichtigt wird, insbesondere durch eine Multiplikation mit einem positiven Gewichtungsfaktor. Die solare Momentanreserve kann also zusätzlich mit einer Gewichtungsfunktion verändert werden, besonders indem sie mit einem positiven Gewichtungsfaktor multipliziert wird, der insbesondere im Bereich von 0,5 bis 2 liegen kann. Dadurch ist ein Nachjustieren der solaren Momentanreserve möglich, oder die Berücksichtigung besonderer Gegebenheiten wie beispielsweise der konkrete Ort des Netzanschlusspunktes im Netz, an dem die betreffende Solaranlage einspeist.

Vorstehende und nachfolgende Beschreibungen zu oder im Zusammenhang mit Solaranlagen betreffen besonders bevorzugt Photovoltaikanlagen.

Gemäß einer Ausführungsform wird vorgeschlagen, dass das Verfahren dadurch gekennzeichnet ist, dass für die Solaranlage, oder für eine Mischanlage, die wenigstens eine Solaranlage und wenigstens eine Windenergieanlage umfasst, eine bereitstellbare solare Momentanreserve berechnet wird. Diese gibt an, wie viel Momentanreserve die wenigstens eine Windenergieanlage durch Unterstützung der wenigstens einen Solaranlage vorhalten kann, wenn die Windenergieanlage in einem entsprechenden Stützmodus betrieben wird. Dazu wird vorgeschlagen, dass diese bereitstellbare solare Momentanreserve in Abhängigkeit der momentan eingespeisten Solarleistung, der im Normalmodus momentan durch die wenigstens eine Windenergieanlage eingespeisten Windleistung und des Netzzustandes des elektrischen Versorgungsnetzes bzw. der dazu repräsentativen Größe berechnet wird. Die bereitstellbare solare Momentanreserve ist somit eine, die bereitstellbar ist und bei Bedarf abgerufen werden kann, die also nicht dauerhaft bereitgestellt oder sogar eingespeist wird. Es ist also der Wert, der angibt bis zu welcher Höhe eine bereitstellbare solare Momentanreserve vorgehalten werden soll. Dazu fließt die momentan eingespeiste Solarleistung ein, denn diese soll durch Stützleistung der Windenergieanlage ergänzt werden. Es schließt auch den Normalmodus ein, in dem die Windenergieanlage betrieben werden könnte, wenn sie nicht in den Stützmodus wechselt. Es geht auch der Netzzustand des elektrischen Versorgungsnetzes ein, denn davon kann letztlich abhängen, ob überhaupt ein Bedarf für eine Stützleistung besteht.

Erfindungsgemäß wird außerdem eine Windenergieanlage vorgeschlagen, die elektrische Energie aus Wind zum Einspeisen in ein elektrisches Versorgungsnetz erzeugen kann und wobei

- die Windenergieanlage einen aerodynamischen Rotor mit in ihrem Blattwinkel verstellbaren Rotorblättern aufweist,

- der Rotor mit einer variablen Rotordrehzahl betreibbar ist, und

- die Windenergieanlage einen mit dem aerodynamischen Rotor gekoppelten Generator aufweist, zum Erzeugen einer Generatorleistung, wobei

- die Windenergieanlage in einem Normalmodus betrieben wird, in dem sie verfügbare Windleistung bis zu einer Nennleistung in das elektrische Versorgungsnetz einspeist, wobei die verfügbare Windleistung eine Leistung bezeichnet, die abhängig vom Wind und technischer Grenzen von der Windenergieanlage aus dem Wind gewonnen und in das elektrische Versorgungsnetz eingespeist werden kann, und

- die Windenergieanlage in Abhängigkeit einer Betriebssituation wenigstens einer in dasselbe Netz einspeisenden Solaranlage aus einem Normalmodus in einen Stützmodus wechselt.

Insbesondere wird eine Windenergieanlage vorgeschlagen, die dazu vorbereitet ist, ein Verfahren gemäß wenigstens einer vorstehend beschriebenen Ausführungsform auszuführen. Dazu weist sie insbesondere einen Prozessrechner auf, auf dem das Verfahren implementiert ist. Es kommt aber auch in Betracht, dass sie mit externen Rechnern verbunden ist bzw. entsprechende Schnittstellen aufweist, um für das Verfahren notwendige externe Größen berücksichtigen zu können.

Es kann auch ein Teil des Verfahrens auf einem externen Prozessrechner ausgeführt oder gesteuert werden.

Vorzugsweise ist ein Wettermodul zum Auswerten und/oder Aufnehmen von Wetterdaten vorhanden, das auch eine Sonneneinstrahlung dem Betrage nach erfassen kann. Hier liegt die Erkenntnis zu Grunde, dass eine Erfassung der Sonneneinstrahlung an der wenigstens einen Windenergieanlage ausreichend Information über eine verfügbare photovoltaische Leistung einer Photovoltaikanlage in der Nähe geben kann. Das Wettermodul kann eine Photozelle zum Messen von Licht aufweisen, und/oder eine Schnittstelle zum Empfangen externer Wetterdaten.

Es wird auch ein Windpark mit mehreren Windenergieanlagen vorgeschlagen. Der Windpark weist somit wenigstens zwei vorstehend beschriebene Windenergieanlagen auf und diese wenigstens zwei Windenergieanlagen speisen über einen gemeinsamen Netzanschlusspunkt in das elektrische Versorgungsnetz ein. Dadurch kann durch Verwendung mehrerer Windenergieanlagen das Verfahren besonders effizient eingesetzt werden, weil dadurch ein großes Potential an Momentanreserve oder anderer Stützleistung geschaffen werden kann.

Erfindungsgemäß wird zudem ein Windenergiesystem vorgeschlagen, das wenigstens einen vorstehend beschriebenen Windpark umfasst und wenigstens eine Solaranlage, wobei die wenigstens eine Solaranlage in dasselbe elektrische Versorgungsnetz einspeist. Diese Solaranlage kann dabei vorzugsweise über einen anderen Netzanschlusspunkt in das elektrische Versorgungsnetz einspeisen als der Windpark. Damit wird erreicht, dass grundsätzlich sowohl der Windpark als auch die wenigstens eine Solaranlage unabhängig voneinander betrieben werden können. Gleichwohl wird eine Synergie geschaffen, bei der die Windenergieanlagen, also der Windpark, Stützaufgaben, besonders das Bereitstellen von Stützleistung oder Momentanreserve, für die Solaranlage übernimmt. Dies erfolgt dadurch, dass die Windenergieanlage in Abhängigkeit einer Betriebssituation der wenigstens einen Solaranlage jeweils aus ihrem Normalmodus in einen Stützmodus wechselt.

Nachfolgend wird die Erfindung anhand von Ausführungsformen beispielhaft unter Bezugnahme auf die begleitenden Figuren näher erläutert.

Figur 1     zeigt eine Windenergieanlage in einer perspektivischen Darstellung.

Figur 2     zeigt einen Windpark schematisch.

Figur 3     zeigt schematisch einen Ausschnitt aus einem elektrischen Versorgungsnetz.

Figur 4     veranschaulicht mögliche Zusammenhänge zwischen einer Momentanreserveleistung und einer Frequenzänderung im elektrischen Versorgungsnetz.

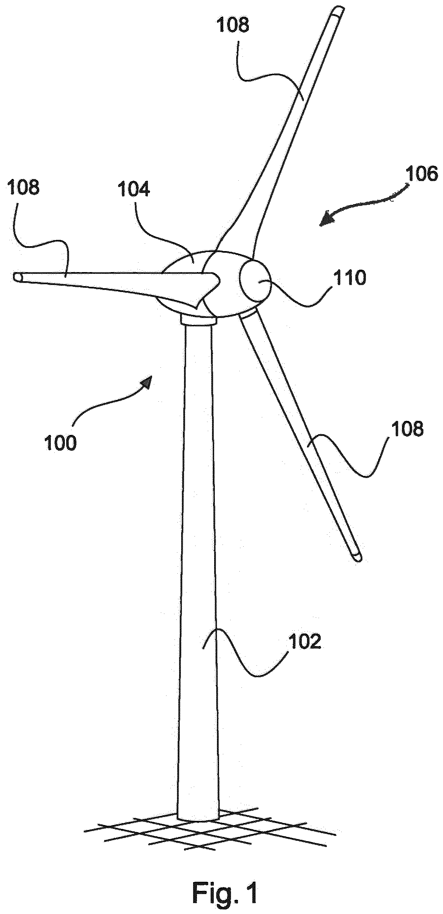

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

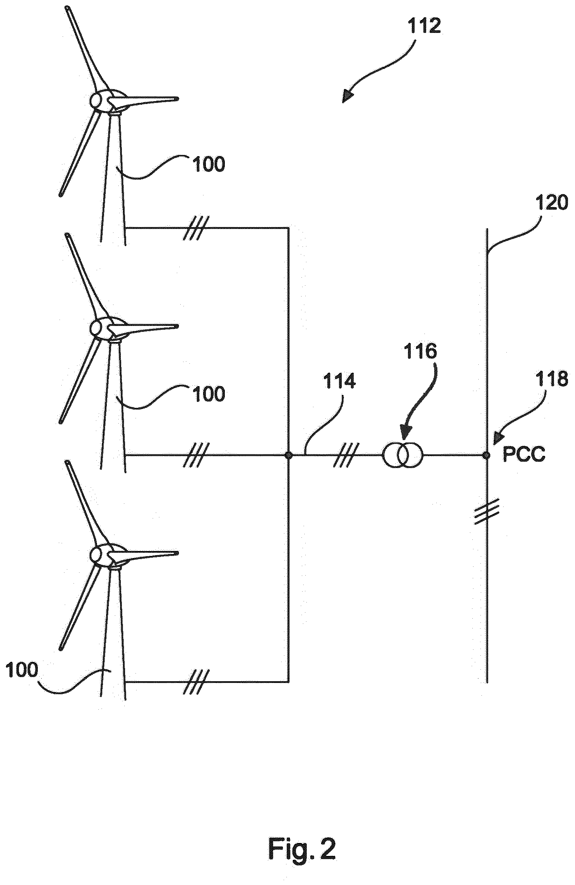

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

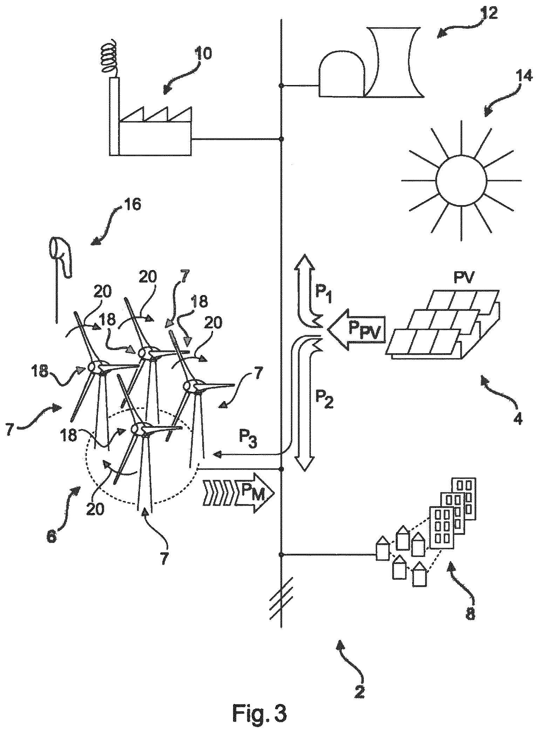

Figur 3 zeigt einen Ausschnitt eines elektrischen Versorgungsnetzes 2, an dem schematisch dargestellt eine Photovoltaikanlage 4 und ein Windpark 6 mit Windenergieanlagen 7 angeschlossen sind. Der Windpark 6 kann wie der Windpark 112 der Figur 2 ausgebildet sein und Windenergieanlagen 7 jeweils wie die Windenergieanlage 100 der Figur 1 aufweisen. Das elektrische Versorgungsnetz 2 kann dem elektrischen Versorgungsnetz 120 der Figur 2 entsprechen.

Repräsentativ für weitere Verbraucher order Einspeiser zeigt Figur 3 eine an das elektrische Versorgungsnetz 2 angeschlossene Stadt 8, einen industriellen Verbraucher 10, der beispielsweise eine Fabrik sein kann und als weiterer Erzeuger ein Großkraftwerk 12.

Durch die schematisch eingezeichnete Sonne 14 und den schlaffen Windsack 16 soll angedeutet werden, dass die Figur 3 für das gezeigte elektrische Versorgungsnetz 2 eine Großwetterlage zeigt, bei der eine starke Sonneneinstrahlung vorherrscht und wenig Wind. Entsprechend erzeugt die Photovoltaikanlage 4, die auch vereinfachend als PV-Anlage bezeichnet werden kann, viel elektrische Leistung $P_{PV}$, die an das elektrische Versorgungsnetz 2 abgegeben wird. Die Dicke des Pfeils und der weiteren noch beschriebenen Pfeile soll auch jeweils die Leistungshöhe zumindest veranschaulichen. Es wird also viel PV-Leistung $P_{PV}$ in das elektrische Versorgungsnetz eingespeist, die sich in die Leistungsanteile $P_1$ und $P_2$ aufteilt, die in verschiedene Bereiche des elektrischen Versorgungsnetzes 2 fließen. Dies dient nur der Veranschaulichung, um zu verdeutlichen, dass diese von der PV-Anlage 4 erzeugte Leistung $P_{PV}$ generell dem elektrischen Versorgungsnetz 2 zur Verfügung gestellt wird.

Außerdem ist ein Leistungsanteil $P_3$ mit einem dünnen Pfeil eingezeichnet und sollte daher nur einen geringen Anteil an der eingespeisten PV-Leistung $P_{PV}$ ausmachen. Dieser weitere Leistungsanteil $P_3$ wird dem Windpark 6 zur Verfügung gestellt. Es ist zu beachten, dass auch dies nur der Veranschaulichung dient und dieser Leistungsanteil $P_3$ nicht unmittelbar von der PV-Anlage 4 stammen muss. Es geht vielmehr darum, dass der Windpark 6 einen Leistungsanteil $P_3$ bezieht, der deutlich geringer ist als die von der PV-Anlage eingespeiste Leistung $P_{PV}$. Damit kann der Leistungsanteil $P_3$ zumindest rechnerisch ein Teil der insgesamt eingespeisten PV-Leistung $P_{PV}$ sein.

In dieser Veranschaulichung der Figur 3 wird somit davon ausgegangen, dass der Windpark 6 in der gezeigten Situation keine Leistung aus Wind erzeugen kann. Danach wird der Leistungsanteil $P_3$ dazu verwendet, die Rotoren 18 in eine Drehung 20 zu versetzen. Die Rotoren 18 können den Rotoren 106 gemäß Figur 1 entsprechen. Die Drehung 20 ist durch entsprechende Pfeile in der Figur 3 angedeutet.

Somit sind die Rotoren 18 des Windparks 6 in eine Drehung versetzt und werden in dieser Drehbewegung gehalten. Dazu kann der Leistungsanteil $P_3$ verwendet werden. Die Windenergieanlagen 7 des Windparks 6 und damit im Ergebnis auch der Windpark 6 als solcher sind somit in einem Stützmodus. In der gezeigten Situation der Figur 3, in der kein Wind vorhanden ist, wäre der Normalmodus, dass die Windenergieanlagen ausgeschaltet sind oder allenfalls in einem Standby-Betrieb gehalten werden.

Dadurch, dass diese Rotoren 18 jeweils in eine Drehung 20 versetzt sind, weist jede Windenergieanlage 7 kinetische Energie in Form von Rotationsenergie des jeweiligen Rotors 18 auf. Der Windpark 6 weist somit insgesamt eine hohe Menge an Rotationsenergie auf. Rein vorsorglich wird darauf hingewiesen, dass in dem Windpark 6 nur schematisch vier Windenergieanlagen 7 gezeigt sind, dass aber deutlich mehr Windenergieanlagen in dem Windpark vorhanden sein können und wie beschrieben betrieben werden können, z.B. mehr als 20, mehr als 50 oder sogar mehr als 100 Windenergieanlagen 7.

Diese vorhandene Rotationsenergie kann bei Bedarf zum Stützen des elektrischen Versorgungsnetzes 2 als Momentanreserveleistung $P_M$ eingespeist werden. Dazu ist veranschaulichend ein breiter Pfeil unterbrochen gezeichnet. Damit soll veranschaulicht werden, dass diese Momentanreserveleistung $P_M$ gegebenenfalls eingespeist werden kann, dass diese aber nicht dauerhaft eingespeist wird, sondern nur in kurzen Momenten, in denen eine entsprechende Stützung des elektrischen Versorgungsnetzes 2 notwendig ist. Dann allerdings kann auch eine große Stützleistung $P_M$ eingespeist werden.

Ein solches Einspeisen solcher Stützleistung

$P_M$ kann beispielsweise dann erforderlich werden, wenn der industrielle Verbraucher 10 dem elektrischen Versorgungsnetz 2 zugeschaltet wird, oder wenn in der Stadt 8 plötzlich viel Leistung bezogen wird.

Die Figur 3 veranschaulicht eine Art eines Stützmodus für eine besondere Situation, in der nämlich gar kein Wind vorhanden ist. Es kommen aber auch andere Varianten in Betracht, wie beispielsweise, dass ausreichend Wind vorhanden ist, um zumindest überhaupt etwas Leistung durch den Windpark 6 in das elektrische Versorgungsnetz 2 einzuspeisen. Gemäß einer Variante würde der Windpark 6 und damit die Windenergieanlagen 7 in einem optimalen Betriebspunkt betrieben werden, in dem besonders die Drehzahl der Rotoren 18 einen für den vorherrschenden Wind optimalen Wert aufweist. Für die Wahl des Stützmodus kann dieser Betriebspunkt beibehalten werden. Es wird dennoch ein hoher Wert an Momentanreserveleistung $P_M$ angeboten. Das kann bedeuten, dass für eine frequenzänderungsabhängige Einspeisung der Momentanreserveleistung $P_M$ eine andere Abhängigkeit zugrunde gelegt wird als im Normalmodus.

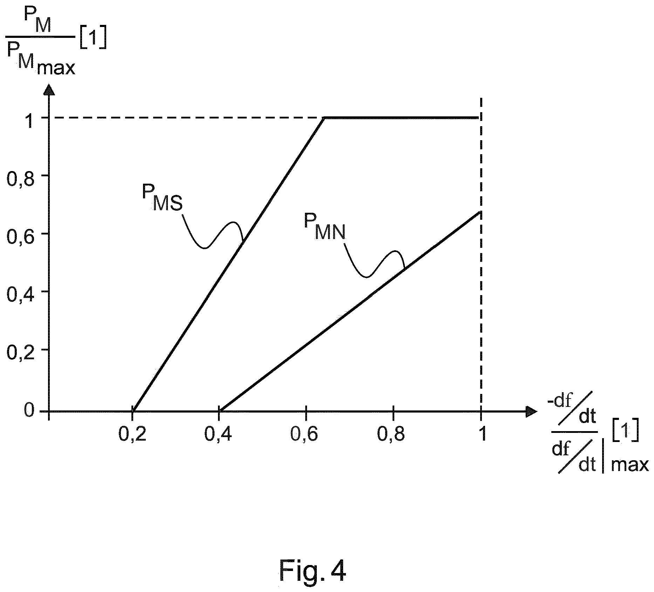

Eine solche Situation ist in der Figur 4 beispielhaft veranschaulicht. In dem Diagramm der Figur 4 ist eine Momentanreserveleistung $P_M$ in Abhängigkeit der Frequenzänderung df/dt für zwei Fälle aufgetragen. Die Momentanreserveleistung $P_M$ ist normiert auf eine maximal einzuspeisende Momentanreserveleistung $P_{Mmax}$, die für beide Betriebsmodi gleich ist. Die Frequenzänderung des elektrischen Versorgungsnetzes df/dt ist auch normiert, nämlich auf ein maximales df/dt. Außerdem ist -df/dt aufgetragen. Das Diagramm der Figur 4 zeigt somit grundsätzlich negative Werte der Frequenzänderung df/dt. Die normierte Abszisse reicht also von 0 bis -1.

Beispielhaft sind zwei Abhängigkeitsfunktionen für die Momentanreserveleistung $P_M$ eingezeichnet, nämlich die Momentanreserveleistung $P_{MS}$ für den Stützmodus und die Momentanreserveleistung $P_{MN}$ für den Normalmodus.

In diesem veranschaulichenden Beispiel ist die Steigung der Momentanreserveleistung $P_{MS}$ für den Stützmodus doppelt so groß wie die Steigung der Momentanreserveleistung $P_{MN}$ für den Normalmodus. Außerdem wird auch im Stützmodus die Momentanreserveleistung $P_{MS}$ früher, also bei einer betragsmäßig kleineren Frequenzänderung df/dt abgerufen, als dies für die Momentanreserveleistung $P_{MN}$ ist, die hier beispielhaft erst ab einer doppelt so großen Frequenzänderung df/dt abgerufen wird.

Insoweit die Momentanreserveleistung $P_M$ als Funktion in Abhängigkeit der Frequenzänderung verstanden wird, die einen Anfangsgrenzwert überschreitet, liefert die Momentanreserveleistung $P_{MS}$ des Stützmodus jeweils einen doppelt so großen Wert wie die Momentanreserveleistung $P_{MN}$ des Normalmodus. Beispielsweise weist die Momentanreserveleistung $P_{MS}$ des Stützmodus bei einer normierten Frequenzänderung von 0,4, also bei 0,2 über ihrem Startwert, einen normierten Leistungswert von etwas mehr als 0,4 auf, wohingegen die Momentanreserveleistung $P_{MN}$ des Normalmodus bei dem normierten Frequenzänderungswert von 0,6, also 0,2 über ihrem Startwert einen normierten Leistungswert von etwa 0,2 auf, und damit die Hälfte von dem korrespondierenden Wert der Momentanreserveleistung $P_{MS}$ des Stützmodus.

Auch dies ist nur ein Erläuterungsbeispiel und es kommt bspw. auch in Betracht, dass die beiden Startwerte des Normalmodus und des Stützmodus identisch und/oder bei null sind.

Es wurde somit erkannt, dass bei einem hohen Deckungsanteil bei der Stromerzeugung durch regenerative Energien unter Umständen ein Bedarf an Momentanreservebereitstellung durch umrichterbasierte Erzeugungssysteme bestehen kann. Dabei wurde erkannt, dass PV-Systeme Momentanreserve nur durch die Integration eines zusätzlichen Speichers realisieren können. Dafür wird nun vorgeschlagen, Windenergieanlagen auch für die Momentanreservebereitstellung zu nutzen, wenn der Wind nicht weht, aber infolge der Sonneneinstrahlung anteilig viel PV-Strom eingespeist wird. Ein Vorschlag dazu ist, die Windenergieanlagen motorisch auf Drehzahl zu bringen, um das Netz bei einem Momentanreservebedarf aus der Rotorenergie bzw. Rotationsenergie zu stützen. Hier liegt auch die Erkenntnis zugrunde, dass bei einer hohen Deckung des Strombedarfs durch PV zumindest statistisch in der Regel kaum Windenergie eingespeist wird und deshalb die Kapazitäten der Windenergieanlagenumrichter kaum ausgelastet sind. Es bestehen aber auch andere Möglichkeiten der Realisierbarkeit, wie oben schon erläutert wurde.

Mit der vorgeschlagenen Erfindung soll auch möglichst die Netzintegration erneuerbarer Energiequellen allgemein verbessert werden. Da grundsätzlich eine Momentanreservebereitstellung zu jedem Zeitpunkt im Netz benötigt werden kann, ist eine Idee, diese durch Windenergieanlagen zu realisieren. Dabei wurde erkannt, dass Windenergieanlagen für eine Momentanreservebereitstellung allgemein sehr gut geeignet sind, da die Rotormasse, insbesondere das Massenträgheitsmoment jedes Rotors in Bezug zu der installierten Leistung sehr hoch ist.

Somit kann eine Verbesserung der Netzintegration erneuerbarer Energien ganz allgemein und insbesondere für Windenergieanlagen und photovoltaische Anlagen erreicht werden und damit ein hoher Deckungsanteil bei der Stromerzeugung durch erneuerbare Energiequellen erreicht werden. Auch können konventionelle Kraftwerke durch Kraftwerke auf Basis von Windenergieanlagen ersetzt werden. Zudem kann eine netztechnische Obergrenze für den Zubau von erneuerbaren Energiequellen, die aufgrund fehlender Netzstützung gesetzt werden könnten oder bereits vorhanden sind, vermieden oder zumindest erhöht werden. Grundsätzlich ist auch eine Ermöglichung vollständig umrichtergespeister Netze durch die vorgeschlagenen Lösungen erreichbar oder zumindest besser erreichbar.

Als Lösung wird u.a. auch ein motorischer Betrieb oder Trudelbetrieb der Windenergieanlagen zur Bereitstellung von Momentanreserve durch die kinetische Energie des Rotors vorgeschlagen. Ein wichtiger Vorteil der Erfindung ist die Vermeidung von rotierenden Phasenschiebern bzw. Vermeidung des Einbaus von Speichern in photovoltaischen Systemen (PV-Systemen) zur Bereitstellung von Momentanreserve. Somit können nicht nur Kosten für die Netzintegration erneuerbarer Energien im Allgemeinen gesenkt werden, sondern die vorgeschlagene Lösung bietet auch den Betreibern von Windenergieanlagen die Möglichkeit, eine zusätzliche Systemdienstleistung anzubieten. Eine solche Funktionalität ist insbesondere in die Anlagen- oder Parksteuerung zu implementieren.

Erfindungsgemäß wird auch die folgende Ausführungsform 1 vorgeschlagen, die mit allen anderen beschriebenen Ausführungsformen, insbesondere mit den Gegenständen aller Ansprüche, kombiniert werden kann:

Ausführungsform 1: Verfahren zum Steuern wenigstens einer Windenergieanlage (7) zum Erzeugen elektrischer Energie aus Wind zum Einspeisen in ein elektrisches Versorgungsnetz (2), wobei

- die Windenergieanlage (7) einen aerodynamischen Rotor (18) mit in ihrem Blattwinkel verstellbaren Rotorblättern aufweist,

- der Rotor (18) mit einer variablen Rotordrehzahl betreibbar ist, und

- die Windenergieanlage (7) einen mit dem aerodynamischen Rotor (18) gekoppelten Generator aufweist, zum Erzeugen einer Generatorleistung, wobei

- die Windenergieanlage (7) in einem Normalmodus betrieben wird, in dem sie verfügbare Windleistung bis zu einer Nennleistung in das elektrische Versorgungsnetz (2) einspeist, wobei die verfügbare Windleistung eine Leistung bezeichnet, die abhängig vom Wind und technischer Grenzen von der Windenergieanlage (7) aus dem Wind gewonnen und in das elektrische Versorgungsnetz (2) eingespeist werden kann, und

- die Windenergieanlage (7) in Abhängigkeit einer Betriebssituation wenigstens einer in dasselbe elektrische Versorgungsnetz (2) einspeisenden Solaranlage aus einem Normalmodus in einen Stützmodus wechselt.

aus Wind zum Einspeisen in ein elektrisches Versorgungsnetz (2), wobei

    - die Windenergieanlage (7) einen aerodynamischen Rotor (18) mit in ihrem Blattwinkel verstellbaren Rotorblättern aufweist,

    - der Rotor (18) mit einer variablen Rotordrehzahl betreibbar ist, und

    - die Windenergieanlage (7) einen mit dem aerodynamischen Rotor (18) gekoppelten Generator aufweist, zum Erzeugen einer Generatorleistung, wobei

    - die Windenergieanlage (7) in einem Normalmodus betrieben wird, in dem sie verfügbare Windleistung bis zu einer Nennleistung in das elektrische Versorgungsnetz (2) einspeist, wobei die verfügbare Windleistung eine Leistung bezeichnet, die abhängig vom Wind und technischer Grenzen von der Windenergieanlage (7) aus dem Wind gewonnen und in das elektrische Versorgungsnetz (2) eingespeist werden kann, und

    - die Windenergieanlage (7) in Abhängigkeit einer Betriebssituation wenigstens einer in dasselbe elektrische Versorgungsnetz (2) einspeisenden Solaranlage aus einem Normalmodus in einen Stützmodus wechselt, wobei

    - die Windenergieanlage (7) in dem Stützmodus mehr Momentanreserve zur Verfügung stellen kann, als in dem Normalmodus.

2. Verfahren nach Anspruch 1, **dadurch gekennzeichnet, dass** in Abhängigkeit einer Frequenzänderung df/dt einer im elektrischen Versorgungsnetz (2) erfassten Netzfrequenz f eine Momentanreserveleistung $P_M$ in das elektrische Versorgungsnetz (2) eingespeist wird, wobei zwischen dem Normalmodus und dem Stützmodus unterschiedliche Abhängigkeiten der Momentanreserveleistung $P_M$ von der Frequenzänderung df/dt derart vorgesehen sind, dass bei gleicher Frequenzänderung df/dt der Betrag der Momentanreserveleistung $P_M$ im Stützmodus größer ist, als im Normalmodus, insbesondere wird die Momentanreserveleistung $P_M$ mit der Formel $P_M = k \cdot df/dt$ berechnet, wobei k ein Abhängigkeitsfaktor ist und dem Betrage nach im Stützmodus größer ist als im Normalmodus.

3. Verfahren nach einem der vorstehenden Ansprüche, **dadurch gekennzeichnet, dass** zum Stützen des elektrischen Versorgungsnetzes (2) eine Stützleistung, insbesondere eine Momentanreserveleistung angeboten wird, die zum Einspeisen in das elektrische Versorgungsnetz (2) abgerufen werden kann, oder in Abhängigkeit eines Netzverhaltens eingespeist werden kann, wobei die wenigstens eine Windenergieanlage (7) im Stützmodus eine höhere Stützleistung anbietet als im Normalmodus.

**Patentansprüche**

1. Verfahren zum Steuern wenigstens einer Windenergieanlage (7) zum Erzeugen elektrischer Energie

**4.** Verfahren nach einem der vorstehenden Ansprüche, **dadurch gekennzeichnet, dass** die Windenergieanlage (7) im Stützmodus zumindest zeitweiseweniger Leistung in das elektrische Versorgungsnetz (2) einspeist, als im Normalmodus, oder Leistung aus dem elektrischen Versorgungsnetz (2) entnimmt, um dadurch eine erhöhte Momentanreserve bereitzustellen.

**5.** Verfahren nach einem der vorstehenden Ansprüche, **dadurch gekennzeichnet, dass** der Stützmodus der Windenergieanlage (7) wenigstens einen Betrieb umfasst, ausgewählt aus der Liste aufweisend

- einen Trudelbetrieb, in dem sich der Rotor (18) der Windenergieanlage (7) durch Antrieb durch den Wind dreht, ohne Leistung zu erzeugen,
- einen Betrieb hoher Drehzahl, in dem sich der Rotor (18) der Windenergieanlage (7) mit hoher Drehzahl dreht, wobei keine Leistung oder nur wenig Leistung eingespeist wird, und
- einen Nullleistungsbetrieb, in dem die Drehzahl ohne Leistungseinspeisung bis zur Maximaldrehzahl erhöht wird und
- einen motorischen Betrieb, in dem der Rotor (18) der Windenergieanlage (7) durch elektrische Leistung ($P_{PV}$)aus dem elektrischen Versorgungsnetz (2) angetrieben wird, die die momentan von der Solaranlage in das elektrische Versorgungsnetz (2) eingespeiste Solarleistung nicht überschreitet.

**6.** Verfahren nach einem der vorstehenden Ansprüche, **dadurch gekennzeichnet, dass**

- das Wechseln in den Stützmodus von der vorherrschenden Windgeschwindigkeit abhängt und außerdem oder alternativ
- wenigstens eine Eigenschaft des Stützmodus von der vorherrschenden Windgeschwindigkeit abhängt.

**7.** Verfahren nach einem der vorstehenden Ansprüche, **dadurch gekennzeichnet, dass**

- das Wechseln in den Stützmodus und außerdem oder alternativ
- wenigstens eine Eigenschaft des Stützmodus

von wenigstens einem Netzzustand des elektrischen Versorgungsnetzes (2) bzw. einer dazu repräsentativen Größe abhängt, ausgewählt aus der Liste aufweisend

- eine Netzfrequenz,
- eine Netzfrequenzänderung,
- ein Netzfrequenzänderungsgradient,
- eine Netzspannung,

- eine Netzspannungsänderung,
- ein einen Netzzustand anzeigendes externes Netzstatussignal,
- einen Frequenzumrichteranteil, der ein Verhältnis von von Frequenzumrichtern ins elektrische Versorgungsnetz (2) eingespeister Leistung zu insgesamt in das elektrische Versorgungsnetz (2) eingespeister Leistung angibt, und
- ein von einem Netzbetreiber übertragenes Anforderungssignal zum Anfordern einer Momentanreserve.

**8.** Verfahren nach einem der vorstehenden Ansprüche, **dadurch gekennzeichnet, dass** die Windenergieanlage (7) in den Stützmodus wechselt und gegenüber dem Normalmodus ihre Drehzahl erhöht, wenn

- die wenigstens eine Solaranlage wenigstens einen vorgebbaren Mindestanteil ihrer Nennleistung, insbesondere 50% ihrer Nennleistung, in das elektrische Versorgungsnetz (2) einspeist und
- ein Bedarf einer Momentanreserve erfasst wurde.

**9.** Verfahren nach einem der vorstehenden Ansprüche, **dadurch gekennzeichnet, dass** die wenigstens eine Windenergieanlage (7) dauerhaft in dem Stützmodus mit gegenüber dem Normalmodus erhöhter Rotordrehzahl betrieben wird, solange

- die wenigstens eine Solaranlage wenigstens einen vorgebbaren Mindestanteil ihrer Nennleistung, insbesondere wenigstens 50% ihrer Nennleistung, in das elektrische Versorgungsnetz (2) einspeist und
- der vorherrschende Wind so schwach ist, dass die wenigstens eine Windenergieanlage (7) höchsten einen vorgebbaren Maximalanteil ihrer Nennleistung, insbesondere höchstens 50% ihrer Nennleistung, in das elektrische Versorgungsnetz (2) einspeisen kann.

**10.** Verfahren nach einem der vorstehenden Ansprüche, **dadurch gekennzeichnet, dass**

- ein Bedarf einer relativen Momentanreserve erfasst wird, wobei diese relative Momentanreserve eine zusätzlich einspeisbare Leistung in Bezug auf eine Referenzleistung kennzeichnet,
- basierend auf dem erfassten Bedarf der relativen Momentanreserve und einer die Solaranlage kennzeichnenden Solarreferenzleistung, eine solare Momentanreserve, als die Leistung bestimmt wird, die eine von der Solaranlage vorzuhaltende oder bereitzustellende Momentanreserve kennzeichnet, und

- die wenigstens eine Windenergieanlage (7) so in einem Stützmodus betrieben wird, dass sie die bestimmte solare Momentanreserve bereitstellen kann.

11. Verfahren nach Anspruch 10, **dadurch gekennzeichnet, dass**

- die relative Momentanreserve die zusätzlich einspeisbare Leistung in Bezug auf eine momentan in das elektrische Versorgungsnetz (2) oder einen relevanten Netzabschnitt eingespeiste Leistung angibt, und/oder
- die Solarreferenzleistung die momentan von der Solaranlage in das elektrische Versorgungsnetz (2) eingespeisten Solarleistung angibt, und/oder
- die wenigstens eine Windenergieanlage (7) so in einem Stützmodus betrieben wird, dass sie gegenüber ihrem Normalmodus eine erhöhte Drehzahl aufweist, um dadurch die solare Momentanreserve für die Solaranlage bereitzustellen.

12. Verfahren nach Anspruch 10 oder 11, **dadurch gekennzeichnet, dass**

- sich die solare Momentanreserve ergibt als Produkt der relativen Momentanreserve mit der momentan eingespeisten Solarleistung, wobei optional
- eine Gewichtungsfunktion berücksichtigt wird, insbesondere durch eine Multiplikation der solaren Momentanreserve mit einem positiven Gewichtungsfaktor.

13. Verfahren nach einem der vorstehenden Ansprüche, **dadurch gekennzeichnet, dass** für die Solaranlage, oder für eine Mischanlage, die wenigstens eine Solaranlage und die wenigstens eine Windenergieanlage (7) umfasst, in Abhängigkeit

- der momentan eingespeisten Solarleistung,
- der im Normalmodus momentan durch die wenigstens eine Windenergieanlage (7) eingespeisten Windleistung und
- des Netzzustands des elektrischen Versorgungsnetzes (2) bzw. der dazu repräsentativen Größe,
- eine bereitstellbare solare Momentanreserve berechnet wird, die angibt, wie viel Momentanreserve die wenigstens eine Windenergieanlage (7) durch Unterstützung der wenigstens einen Solaranlage vorhalten kann, wenn die Windenergieanlage (7) in einem entsprechenden Stützmodus betrieben wird.

14. Windenergieanlage (7) zum Erzeugen elektrischer Energie aus Wind zum Einspeisen in ein elektrisches Versorgungsnetz (2), wobei

- die Windenergieanlage (7) einen aerodynamischen Rotor (18) mit in ihrem Blattwinkel verstellbaren Rotorblättern aufweist,
- der Rotor (18) mit einer variablen Rotordrehzahl betreibbar ist, und
- die Windenergieanlage (7) einen mit dem aerodynamischen Rotor (18) gekoppelten Generator aufweist, zum Erzeugen einer Generatorleistung, wobei
- die Windenergieanlage (7) in einem Normalmodus betrieben wird, in dem sie verfügbare Windleistung bis zu einer Nennleistung in das elektrische Versorgungsnetz (2) einspeist, wobei die verfügbare Windleistung eine Leistung bezeichnet, die abhängig vom Wind und technischer Grenzen von der Windenergieanlage (7) aus dem Wind gewonnen und in das elektrische Versorgungsnetz (2) eingespeist werden kann, und
- die Windenergieanlage (7) in Abhängigkeit einer Betriebssituation wenigstens einer in dasselbe Netz einspeisenden Solaranlage aus ihrem Normalmodus in einen Stützmodus wechselt, wobei
- die Windenergieanlage (7) in dem Stützmodus mehr Momentanreserve zur Verfügung stellen kann, als in dem Normalmodus.

15. Windenergieanlage (7) nach Anspruch 14, **dadurch gekennzeichnet, dass** sie dazu vorbereitet ist, ein Verfahren nach einem der Ansprüche 1 bis 13 auszuführen, wobei sie insbesondere einen Prozessrechner aufweist, auf dem das Verfahren implementiert ist.

16. Windpark (6) mit wenigstens zwei Windenergieanlagen (7) nach Anspruch 14 oder 15, wobei die Windenergieanlagen (7) über einen gemeinsamen Netzanschlusspunkt in das elektrische Versorgungsnetz (2) einspeisen.

17. Windenergiesystem mit wenigstens einem Windpark (6) nach Anspruch 16 und wenigstens einer Solaranlage, wobei die wenigstens eine Solaranlage in dasselbe elektrische Versorgungsnetz (2) einspeist, vorzugsweise über einen anderen Netzanschlusspunkt, und wobei die Windenergieanlagen (7) in Abhängigkeit einer Betriebssituation der wenigstens einen Solaranlage jeweils aus ihrem Normalmodus in einen Stützmodus wechseln.

## Claims

1. A method for controlling at least one wind power installation (7) for generating electrical energy from wind for infeed into an electrical supply network (2), wherein

- the wind power installation (7) has an aerodynamic rotor (18) with rotor blades which can be adjusted in respect of their blade angle,
- the rotor (18) can be operated at a variable rotor rotational speed, and
- the wind power installation (7) has a generator, which is coupled to the aerodynamic rotor (18), for generating a generator power, wherein
- the wind power installation (7) is operated in a normal mode in which it feeds available wind power up to a rated power into the electrical supply network (2), wherein the available wind power indicates a power which can be obtained from the wind and fed into the electrical supply network (2) depending on the wind and technical limitations of the wind power installation (7), and
- the wind power installation (7) changes over from a normal mode to a support mode depending on an operating situation of at least one solar installation which feeds into the same electrical supply network (2), wherein
- the wind power installation (7) can provide more instantaneous reserve in the support mode than in the normal mode.

2. The method as claimed in claim 1, **characterized in that** an instantaneous reserve power $P_M$ is fed into the electrical supply network (2) depending on a change in frequency df/dt of a network frequency f which is detected in the electrical supply network (2), wherein different dependencies of the instantaneous reserve power $P_M$ on the change in frequency df/dt are provided between the normal mode and the support mode in such a way that, in the case of the same change in frequency df/dt, the magnitude of the instantaneous reserve power $P_M$ in the support mode is greater than in the normal mode, in particular the instantaneous reserve power $P_M$ is calculated using the formula $P_M = k*df/dt$, where k is a dependency factor and, in respect of magnitude, is greater in the support mode than in the normal mode.

3. The method as claimed in one of the preceding claims, **characterized in that**, for the purpose of supporting the electrical supply network (2), a support power, in particular an instantaneous reserve power, is offered, which support power can be called up for the purpose of infeed into the electrical supply network (2), or which support power can be fed in depending on a network behavior, wherein the at least one wind power installation (7) offers a higher support power in the support mode than in the normal mode.

4. The method as claimed in one of the preceding claims, **characterized in that**, in the support mode, the wind power installation (7) at least temporarily feeds less power into the electrical supply network (2) than in the normal mode or draws power from the electrical supply network (2) in order to provide an increased instantaneous reserve in this way.

5. The method as claimed in one of the preceding claims, **characterized in that** the support mode of the wind power installation (7) comprises at least one operating mode selected from the list comprising

- an idling operating mode in which the rotor (18) of the wind power installation (7) rotates by virtue of being driven by the wind, without generating power,
- a high rotational speed operating mode in which the rotor (18) of the wind power installation (7) rotates at high rotational speed, wherein no power or only little power is fed in, and
- a zero-power operating mode in which the rotational speed is increased up to the maximum rotational speed without power infeed, and
- a motorized operating mode in which the rotor (18) of the wind power installation (7) is driven by electrical power ($P_{PV}$) from the electrical supply network (2), which electrical power does not exceed the solar power instantaneously fed into the electrical supply network (2) by the solar installation.

6. The method as claimed in one of the preceding claims, **characterized in that**

- the changeover to the support mode depends on the prevailing wind speed and in addition or as an alternative
- at least one property of the support mode depends on the prevailing wind speed.

7. The method as claimed in one of the preceding claims, **characterized in that**

- the changeover to the support mode and in addition or as an alternative
- at least one property of the support mode

depends on at least one network state of the electrical supply network (2) or a variable which represents said network state, selected from the list comprising

- a network frequency,
- a change in network frequency,
- a gradient of the change in network frequency,
- a network voltage,
- a change in network voltage,

- an external network status signal which indicates a network state,
- a frequency converter proportion which specifies a ratio of the power which is fed into the electrical supply network (2) by frequency converters to the total power which is fed into the electrical supply network (2),
and
- a request signal which is transmitted by a network operator for requesting an instantaneous reserve.

8. The method as claimed in one of the preceding claims, **characterized in that** the wind power installation (7) changes over to the support mode and the rotational speed thereof increases in comparison to the normal mode when

   - the at least one solar installation feeds at least a prespecifiable minimum proportion of its rated power, in particular 50% of its rated power, into the electrical supply network (2) and
   - a requirement for an instantaneous reserve has been detected.

9. The method as claimed in one of the preceding claims, **characterized in that** the at least one wind power installation (7) is permanently operated in the support mode at a rotor rotational speed which is increased in comparison to the normal mode, provided that

   - the at least one solar installation feeds in at least a prespecifiable minimum proportion of its rated power, in particular at least 50% of its rated power, into the electrical supply network (2) and
   - the prevailing wind is so weak that the at least one wind power installation (7) can feed at most a prespecifiable maximum proportion of its rated power, in particular at most 50% of its rated power, into the electrical supply network (2).

10. The method as claimed in one of the preceding claims, **characterized in that**

    - a requirement for a relative instantaneous reserve is detected, wherein this relative instantaneous reserve identifies a power, which can additionally be fed in, with respect to a reference power,
    - a solar instantaneous reserve is determined as the power which identifies an instantaneous reserve which is to be kept in reserve or to be provided by the solar installation, based on the detected requirement for the relative instantaneous reserve and a solar reference power which identifies the solar installation, and
    - the at least one wind power installation (7) is operated in a support mode such that it can provide the determined solar instantaneous reserve.

11. The method as claimed in claim 10, **characterized in that**

    - the relative instantaneous reserve specifies the power, which can additionally be fed in, with respect to a power which is instantaneously fed into the electrical supply network (2) or a relevant network section, and/or
    - the solar reference power specifies the solar power which is instantaneously fed into the electrical supply network (2) by the solar installation, and/or
    - the at least one wind power installation (7) is operated in a support mode such that it has an increased rotational speed in comparison to its normal mode in order to provide the solar instantaneous reserve for the solar installation in this way.

12. The method as claimed in claim 10 or 11, **characterized in that**

    - the solar instantaneous reserve is produced as the product of the relative instantaneous reserve and the instantaneously fed-in solar power, wherein optionally
    - a weighting function is taken into account, in particular by multiplication of the solar instantaneous reserve by a positive weighting factor.

13. The method as claimed in one of the preceding claims, **characterized in that**, for the solar installation or for a mixed installation which comprises the at least one solar installation and the at least one wind power installation (7), depending on

    - the instantaneously fed-in solar power,
    - the wind power which is instantaneously fed in by the at least one wind power installation (7) in the normal mode, and
    - the network state of the electrical supply network (2) or of the variable representing said network state,
    - a solar instantaneous reserve which can be provided is calculated, said solar instantaneous reserve specifying how much instantaneous reserve the at least one wind power installation (7) can keep in reserve with the assistance of the at least one solar installation when the wind power installation (7) is operated in a corresponding support mode.

14. A wind power installation (7) for generating electrical energy from wind for infeed into an electrical supply network (2), wherein

- the wind power installation (7) has an aerodynamic rotor (18) with rotor blades which can be adjusted in respect of their blade angle,
- the rotor (18) can be operated at a variable rotor rotational speed, and
- the wind power installation (7) has a generator, which is coupled to the aerodynamic rotor (18), for generating a generator power, wherein
- the wind power installation (7) is operated in a normal mode in which it feeds available wind power up to a rated power into the electrical supply network (2), wherein the available wind power indicates a power which can be obtained from the wind and fed into the electrical supply network (2) depending on the wind and technical limitations of the wind power installation (7), and
- the wind power installation (7) changes over from its normal mode to a support mode depending on an operating situation of at least one solar installation which feeds into the same electrical supply network, wherein
- the wind power installation (7) can provide more instantaneous reserve in the support mode than in the normal mode.

15. The wind power installation (7) as claimed in claim 14, **characterized in that** it is primed to execute a method as claimed in one of claims 1 to 13, wherein it has, in particular, a process computer on which the method is implemented.

16. A wind farm (6) comprising at least two wind power installations (7) as claimed in claim 14 or 15, wherein the wind power installations (7) feed into the electrical supply network (2) via a common network connection point.

17. A wind power system comprising at least one wind farm (6) as claimed in claim 16 and at least one solar installation, wherein the at least one solar installation feeds into the same electrical supply network (2), preferably via a different network connection point, and wherein the wind power installations (7), in each case change over from its normal mode to a support mode depending on an operating situation of the at least one solar installation.

**Revendications**

1. Procédé de commande d'au moins une éolienne (7) pour produire, à partir du vent, de l'énergie électrique à injecter dans un réseau d'alimentation électrique (2), dans lequel

- l'éolienne (7) présente un rotor aérodynamique (18) avec des pales de rotor à angle de pale ajustable,
- le rotor (18) peut fonctionner à une vitesse de rotation de rotor variable, et
- l'éolienne (7) présente un générateur couplé au rotor aérodynamique (18), pour produire une puissance de générateur, dans lequel
- l'éolienne (7) fonctionne dans un mode normal dans lequel elle injecte de la puissance éolienne disponible dans le réseau électrique (2) jusqu'à une puissance nominale, dans lequel la puissance éolienne disponible désigne une puissance qui peut être récupérée par l'éolienne (7) à partir du vent, en fonction du vent et des limites techniques, et peut être injectée dans le réseau d'alimentation électrique (2), et
- l'éolienne (7) passe d'un mode normal à un mode de soutien en fonction d'une situation de fonctionnement d'au moins une installation solaire alimentant le même réseau d'alimentation électrique (2), dans lequel
- l'éolienne (7) peut fournir plus de réserve instantanée dans le mode de soutien que dans le mode normal.

2. Procédé selon la revendication 1, **caractérisé en ce que**, en fonction d'une modification de fréquence df/dt d'une fréquence de réseau f détectée dans le réseau d'alimentation électrique (2), une puissance de réserve instantanée $P_M$ est injectée dans le réseau d'alimentation électrique (2), dans lequel des dépendances différentes de la puissance de réserve instantanée $P_M$ de la modification de fréquence df/dt sont prévues entre le mode normal et le mode de soutien de telle sorte que, pour une même modification de fréquence df/dt, le montant de la puissance de réserve instantanée $P_M$ dans le mode d'appui est supérieur à celui dans le mode normal, en particulier la puissance de réserve instantanée $P_M$ est calculée avec la formule $P_M = k \cdot df/dt$, dans lequel k est un facteur de dépendance et est de montant supérieur dans le mode de soutien à celui dans le mode normal.

3. Procédé selon l'une quelconque des revendications précédentes, **caractérisé en ce qu'**une puissance de soutien, en particulier une puissance de réserve instantanée, qui peut être appelée pour être injectée dans le réseau d'alimentation électrique (2) ou peut être injectée en fonction d'un comportement du réseau, est proposée pour soutenir le réseau d'alimentation électrique (2), dans lequel l'au moins une éolienne (7) offre dans le mode de soutien une puissance de soutien supérieure à celle dans le mode normal.

4. Procédé selon l'une quelconque des revendications précédentes, **caractérisé en ce que** l'éolienne (7) injecte, dans le mode de soutien, au moins temporairement moins de puissance dans le réseau d'alimentation électrique (2) que dans le mode normal, ou prélève de la puissance du réseau d'alimentation électrique (2) afin de fournir ainsi une réserve instantanée augmentée.

**5.** Procédé selon l'une quelconque des revendications précédentes, **caractérisé en ce que** le mode de soutien de l'éolienne (7) comporte au moins un fonctionnement choisi dans la liste présentant

- un régime de ralenti, dans lequel le rotor (18) de l'éolienne (7) tourne par entraînement au vent sans produire de puissance,
- un fonctionnement à vitesse de rotation élevée, dans lequel le rotor (18) de l'éolienne (7) tourne à une vitesse de rotation élevée, dans lequel aucune puissance ou seulement une puissance faible est injectée, et
- un fonctionnement à puissance nulle, dans lequel la vitesse de rotation est augmentée jusqu'à la vitesse de rotation maximale sans injection de puissance et
- un fonctionnement motorisé, dans lequel le rotor (18) de l'éolienne (7) est entraîné par une puissance électrique ($P_{PV}$) provenant du réseau d'alimentation électrique (2), qui ne dépasse pas la puissance solaire instantanément injectée par l'installation solaire dans le réseau d'alimentation électrique (2).

**6.** Procédé selon l'une quelconque des revendications précédentes, **caractérisé en ce que**

- le passage dans le mode de soutien dépend de la vitesse du vent dominante et, par ailleurs ou en variante
- au moins une propriété du mode de soutien dépend de la vitesse du vent dominante.

**7.** Procédé selon l'une quelconque des revendications précédentes, **caractérisé en ce que**

- le passage dans le mode de soutien et par ailleurs ou en variante
- au moins une propriété du mode de soutien

dépend d'au moins un état de réseau du réseau d'alimentation électrique (2) ou d'une grandeur représentative, choisi(e) dans la liste présentant

- une fréquence réseau,
- une modification de fréquence réseau,
- un gradient de modification de fréquence réseau,
- une tension de réseau,
- une modification de tension de réseau,

- un signal d'état de réseau externe indiquant un état de réseau,
- une proportion de convertisseur de fréquence, qui indique un rapport de puissance injectée par des convertisseurs de fréquence dans le réseau d'alimentation électrique (2) par rapport à la puissance totale injectée dans le réseau d'alimentation électrique (2), et
- un signal de demande transmis par un opérateur de réseau pour demander une réserve instantanée.

**8.** Procédé selon l'une quelconque des revendications précédentes, **caractérisé en ce que** l'éolienne (7) passe dans le mode de soutien et augmente sa vitesse de rotation par rapport au mode normal lorsque

- l'au moins une installation solaire injecte au moins une proportion minimale pouvant être prédéfinie de sa puissance nominale, en particulier 50 % de sa puissance nominale, dans le réseau d'alimentation électrique (2) et
- un besoin de réserve instantanée a été détecté.

**9.** Procédé selon l'une quelconque des revendications précédentes, **caractérisé en ce que** l'au moins une éolienne (7) fonctionne durablement dans le mode de soutien avec une vitesse de rotation de rotor augmentée par rapport au mode normal, tant que

- l'au moins une installation solaire injecte au moins une proportion minimale pouvant être prédéfinie de sa puissance nominale, en particulier au moins 50 % de sa puissance nominale, dans le réseau d'alimentation électrique (2) et
- le vent dominant est si faible que l'au moins une éolienne (7) peut injecter au maximum une proportion maximale pouvant être prédéfinie de sa puissance nominale, en particulier au maximum 50 % de sa puissance nominale, dans le réseau d'alimentation électrique (2).

**10.** Procédé selon l'une quelconque des revendications précédentes, **caractérisé en ce que**

- un besoin d'une réserve instantanée relative est détecté, dans lequel cette réserve instantanée relative caractérise une puissance supplémentaire pouvant être injectée par rapport à une puissance de référence,
- sur la base du besoin détecté de la réserve instantanée relative et d'une puissance de référence solaire caractérisant l'installation solaire, une réserve instantanée solaire, définie comme la puissance, désigne une réserve instantanée à conserver ou à fournir par l'installation solaire, et

- l'au moins une éolienne (7) fonctionne dans un mode de soutien de telle sorte qu'elle peut fournir la réserve instantanée solaire définie.

11. Procédé selon la revendication 10, **caractérisé en ce que**

- la réserve instantanée relative indique la puissance pouvant être injectée en supplément par rapport à une puissance injectée instantanément dans le réseau d'alimentation électrique (2) ou une section de réseau pertinente, et/ou
- la puissance solaire de référence indique la puissance solaire instantanément injectée par l'installation solaire dans le réseau d'alimentation électrique (2), et/ou
- l'au moins une éolienne (7) fonctionne dans le mode de soutien de telle sorte qu'elle présente une vitesse de rotation augmentée par rapport à son mode normal afin de fournir ainsi la réserve instantanée solaire pour l'installation solaire.

12. Procédé selon la revendication 10 ou 11, **caractérisé en ce que**

- la réserve instantanée solaire est le produit de la réserve instantanée relative et de la puissance solaire injectée instantanément, dans lequel en option
- une fonction de pondération est prise en compte, notamment par une multiplication de la réserve instantanée solaire par un facteur de pondération positif.

13. Procédé selon l'une quelconque des revendications précédentes, **caractérisé en ce que** pour l'installation solaire, ou pour une installation mixte qui comprend au moins une installation solaire et l'au moins une éolienne (7), en fonction

- de la puissance solaire instantanément injectée,
- de la puissance éolienne instantanément injectée par l'au moins une éolienne (7) dans le mode normal et
- de l'état de réseau du réseau d'alimentation électrique (2) ou de sa grandeur représentative,
- une réserve instantanée solaire disponible est calculée, qui indique la quantité de réserve instantanée que l'au moins une éolienne (7) peut conserver en soutenant l'au moins une installation solaire lorsque l'éolienne (7) fonctionne dans un mode de soutien correspondant.

14. Éolienne (7) destinée à produire, à partir du vent, de l'énergie électrique à injecter dans un réseau d'alimentation électrique (2), dans laquelle

- l'éolienne (7) présente un rotor aérodynamique (18) avec des pales de rotor à angle de pale ajustable,
- le rotor (18) peut fonctionner à une vitesse de rotation de rotor variable, et
- l'éolienne (7) présente un générateur couplé au rotor aérodynamique (18), pour produire une puissance de générateur, dans laquelle
- l'éolienne (7) fonctionne dans un mode normal dans lequel elle injecte la puissance éolienne disponible dans le réseau électrique (2) jusqu'à une puissance nominale, dans lequel la puissance éolienne disponible désigne une puissance qui peut être récupérée par l'éolienne (7) à partir du vent, en fonction du vent et des limites techniques, et peut être injectée dans le réseau d'alimentation électrique (2) , et
- l'éolienne (7) passe de son mode normal dans un mode de soutien en fonction d'une situation de fonctionnement d'au moins une installation solaire alimentant le même réseau, dans laquelle
- l'éolienne (7) peut fournir plus de réserve instantanée dans le mode de soutien que dans le mode normal.

15. Éolienne (7) selon la revendication 14, **caractérisée en ce qu'**elle est préparée pour exécuter un procédé selon l'une quelconque des revendications 1 à 13, dans laquelle elle présente en particulier un ordinateur de processus sur lequel le procédé est mis en œuvre.

16. Parc éolien (6) avec au moins deux éoliennes (7) selon la revendication 14 ou 15, dans lequel les éoliennes (7) alimentent le réseau d'alimentation électrique (2) par l'intermédiaire d'un point de raccordement au réseau commun.

17. Système d'énergie éolienne avec au moins un parc éolien (6) selon la revendication 16 et au moins une installation solaire, dans lequel l'au moins une installation solaire alimente le même réseau d'alimentation électrique (2), de préférence par l'intermédiaire d'un autre point de raccordement au réseau, et dans lequel les éoliennes (7) passent respectivement de leur mode normal à un mode de soutien en fonction d'une situation de fonctionnement de l'au moins une installation solaire.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011081795 A1
- DE 102013101099 A1
- DE 102013203540 A1
- DE 102014101809 A1
- US 20110057445 A1
- US 20160065115 A1
- WO 2014118059 A1
- DE 102009037239 A1
- DE 29715248 U1